(19)

**Europäisches Patentamt**
**European Patent Office**
**Office européen des brevets**

(11) **EP 4 631 623 A1**

(12) **EUROPEAN PATENT APPLICATION**

(43) Date of publication:
**15.10.2025 Bulletin 2025/42**

(21) Application number: **25162231.2**

(22) Date of filing: **07.03.2025**

(51) International Patent Classification (IPC):
**B03C 5/00** *(2006.01)*    **B03C 5/02** *(2006.01)*

(52) Cooperative Patent Classification (CPC):
**B03C 5/026; B03C 5/005;** B03C 2201/26;
G01N 2015/1006

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.03.2024 JP 2024048864**

(71) Applicant: **SCREEN Holdings Co., Ltd.**
**Kyoto-shi, Kyoto 602-8585 (JP)**

(72) Inventor: **KAWARA, Katsuaki**
**Kyoto, 602-8585 (JP)**

(74) Representative: **Goddar, Heinz J.**
**Boehmert & Boehmert**
**Anwaltspartnerschaft mbB**
**Pettenkoferstrasse 22**
**80336 München (DE)**

(54) **CONTROL VOLTAGE CORRECTION METHOD AND DIELECTROPHORESIS APPARATUS**

(57)    The control voltage correction method corrects a control voltage (Vcn) that causes a dielectrophoretic force to act on dielectric particles (P1) contained in the first fluid injected into a fluid chip (11). The control voltage correction method includes a step (S2) of measuring an impedance (IM1) between first electrodes (43a, 43b) in a fluid chip (11) through the first fluid or a second fluid, a step (S3) of calculating a correction coefficient (C) based on the measured impedance (IM1) and a fluid impedance (IM2) derived by a mathematical formula, and a step (S4) of correcting a control voltage (Vcn) based on the correction coefficient (C). The fluid impedance (IM2) indicates an impedance of the first fluid or the second fluid. The first fluid is a fluid containing dielectric particles (P1) and other particles (P2). The second fluid is the same type of fluid as the fluid excluding the dielectric particles (P1) and the other particles (P2) from the first fluid.

FIG. 5

```
            START
              │
              ▼
    ┌──────────────────────┐
    │  INJECT SECOND FLUID  │──── S1
    └──────────────────────┘
              │
              ▼
    ┌──────────────────────────────┐
    │ MEASURE IMPEDANCE BETWEEN FIRST│──── S2
    │ ELECTRODES THROUGH SECOND FLUID│
    └──────────────────────────────┘
              │
              ▼
    ┌──────────────────────────────┐
    │ CALCULATE CORRECTION COEFFICIENT│
    │ BASED ON MEASURED IMPEDANCE    │──── S3
    │ BETWEEN FIRST ELECTRODES AND FLUID│
    │ IMPEDANCE DERIVED BY MATHEMATICAL│
    │         FORMULA                │
    └──────────────────────────────┘
              │
              ▼
    ┌──────────────────────────────┐
    │ CORRECT CONTROL VOLTAGE BASED  │──── S4
    │   ON CORRECTION COEFFICIENT    │
    └──────────────────────────────┘
              │
              ▼
    ┌──────────────────────┐
    │   INJECT FIRST FLUID  │──── S5
    └──────────────────────┘
              │
              ▼
    ┌──────────────────────────────┐
    │ APPLY CORRECTED CONTROL VOLTAGE │──── S6
    └──────────────────────────────┘
              │
              ▼
             END
```

EP 4 631 623 A1

**Description**

BACKGROUND OF THE INVENTION

1. Field of the Invention

The present invention relates to a control voltage correction method and a dielectrophoresis apparatus.

2. Description of the Related Art

The fluid chip described in Japanese Patent Application Publication No. 2023-5958 is a device that electrically separates and collects a collection target contained in a liquid of a sample. The fluid chip includes a substrate, a main channel, an inspection channel, a pair of main electrodes, and a pair of inspection electrodes. The main channel is disposed on the upper surface of the substrate, and liquid can be injected into the main channel. The inspection channel is disposed on the upper surface of the substrate and is disposed away from the main channel. Liquid can be injected into the inspection channel. The pair of main electrodes are disposed between the upper surface of the substrate and the main channel. The pair of inspection electrodes are disposed between the upper surface of the substrate and the inspection channel.

A correction value for correcting the manufacturing variation can be obtained based on the result of the inspection using the inspection electrodes. Therefore, the power supply unit applies a voltage according to the correction value between the main electrodes. As a result, it is possible to apply a stable dielectrophoretic force to the collection target in the liquid injected into the main channel.

SUMMARY OF THE INVENTION

However, in the fluid chip described in Japanese Patent Application Publication No. 2023-5958, it is required to provide inspection electrodes and an inspection channel in order to execute correction of a voltage (control voltage). This increases the size of the fluid chip.

A preferred embodiment of the present invention provides a control voltage correction method and a dielectrophoresis apparatus capable of executing correction of a control voltage while suppressing an increase in size of a fluid chip.

According to a preferred embodiment of the present invention, a control voltage correction method corrects a control voltage that causes a dielectrophoretic force to act on dielectric particles contained in a first fluid injected into a fluid chip. The control voltage correction method includes a step of measuring an impedance between the first electrodes in the fluid chip through the first fluid or a second fluid, a step of calculating a correction coefficient based on the measured impedance between the pair of first electrodes and a fluid impedance derived by a mathematical formula, and a step of correcting the control voltage based on the correction coefficient. The fluid impedance indicates an impedance of the first fluid or an impedance of the second fluid. The first fluid is a fluid containing the dielectric particles and other particles. The second fluid is a fluid of the same type as a fluid obtained by excluding the dielectric particles and the other particles from the first fluid.

In one preferred embodiment, the pair of first electrodes are preferably disposed downstream of a flow of the first fluid or the second fluid with respect to a pair of second electrodes to which the control voltage is to be applied.

In one preferred embodiment, the control voltage correction method preferably includes a step of imaging the dielectric particles in a region downstream of the flow with respect to the pair of second electrodes and upstream of the flow with respect to the pair of first electrodes and a step of changing the correction coefficient based on the imaging result of the dielectric particles. In the step of correcting the control voltage, the control voltage is preferably corrected based on the correction coefficient after the change.

In one preferred embodiment, the step of changing the correction coefficient preferably includes, in a case where the dielectric particles are separated from the other particles by applying the control voltage to the pair of second electrodes, a step of obtaining frequency dependence of a separation rate of the dielectric particles based on the imaging result of the dielectric particles and a step of changing the correction coefficient based on the frequency dependence of the separation rate of the dielectric particles.

In one preferred embodiment, the control voltage correction method preferably further includes a step of injecting the second fluid into a channel of the fluid chip and a step of injecting the first fluid into the channel of the fluid chip after injecting the second fluid into the channel of the fluid chip. In the step of measuring the impedance between the pair of first electrodes, it is preferable to measure the impedance between the pair of first electrodes through the second fluid. In the step of calculating the correction coefficient, the correction coefficient is preferably calculated based on the impedance between the pair of first electrodes measured through the second fluid and the fluid impedance derived by the mathematical formula.

In one preferred embodiment, the mathematical formula is preferably a theoretical formula or an empirical formula. The theoretical formula preferably includes an electrical resistivity or an electrical conductivity of the first fluid or an electrical resistivity or an electrical conductivity of the second fluid. The empirical formula is preferably a function determined by electrical characteristics of the fluid chip and dielectrophoresis characteristics of the dielectric particles.

In one preferred embodiment, the correction coefficient is preferably calculated every time a frequency of the control voltage is changed. It is preferable that the control voltage is corrected based on the correction coefficient calculated according to a change in the frequency of the control voltage.

According to another preferred embodiment of the present invention, a dielectrophoresis apparatus includes a fluid chip, a measurement unit, a correction coefficient calculation unit, and a voltage control unit. The fluid chip includes a pair of first electrodes, and a control voltage that causes a dielectrophoretic force to act on dielectric particles contained in a first fluid is to be applied. The measurement unit is configured to measure an impedance between the pair of first electrodes through the first fluid or a second fluid. The correction coefficient calculation unit is configured to calculate a correction coefficient based on the measured impedance between the pair of first electrodes and a fluid impedance derived by a mathematical formula. The voltage control unit is configured to correct the control voltage based on the correction coefficient. The fluid impedance indicates an impedance of the first fluid or an impedance of the second fluid. The first fluid is a fluid containing the dielectric particles and other particles. The second fluid is a fluid of the same type as a fluid obtained by excluding the dielectric particles and the other particles from the first fluid.

In one preferred embodiment, the fluid chip preferably further includes a pair of second electrodes to which the control voltage is to be applied. The pair of first electrodes are preferably disposed downstream of a flow of the first fluid or the second fluid with respect to a pair of second electrodes.

In one preferred embodiment, the dielectrophoresis apparatus preferably further includes an imaging unit. The imaging unit is preferably configured to image the dielectric particles in a region downstream of the flow with respect to the pair of second electrodes and upstream of the flow with respect to the pair of first electrodes. The correction coefficient calculation unit is preferably configured to change the correction coefficient based on the imaging result of the dielectric particles. The voltage control unit is preferably configured to correct the control voltage based on the correction coefficient after the change.

In one preferred embodiment, in a case where the dielectric particles are separated from the other particles by applying the control voltage to the pair of second electrodes, the correction coefficient calculation unit is preferably configured to obtain frequency dependence of a separation rate of the dielectric particles based on the imaging result of the dielectric particles and to change the correction coefficient based on the frequency dependence.

In one preferred embodiment, the dielectrophoresis apparatus preferably further includes a fluid injection unit. The fluid injection unit is preferably configured to inject the first fluid or the second fluid into a channel of the fluid chip. The fluid injection unit is preferably configured to inject the first fluid into the channel of the fluid chip after injecting the second fluid into the channel of the fluid chip. The measurement unit is preferably configured to measure the impedance between the pair of first electrodes through the second fluid. The correction coefficient calculation unit is preferably configured to calculate the correction coefficient based on the impedance between the pair of first electrodes measured through the second fluid and the fluid impedance derived by the mathematical formula.

In one preferred embodiment, the mathematical formula is preferably a theoretical formula or an empirical formula. The theoretical formula preferably includes an electrical resistivity or an electrical conductivity of the first fluid or an electrical resistivity or an electrical conductivity of the second fluid. The empirical formula is preferably a function determined by electrical characteristics of the fluid chip and dielectrophoresis characteristics of the dielectric particles.

In one preferred embodiment, the correction coefficient calculation unit is preferably configured to calculate the correction coefficient every time a frequency of the control voltage is changed. The voltage control unit is preferably configured to correct the control voltage based on the correction coefficient calculated according to a change in the frequency of the control voltage.

The above and other elements, features, steps, characteristics and advantages of the present invention will become more apparent from the following detailed description of the preferred embodiments with reference to the attached drawings.

BRIEF DESCRIPTION OF THE DRAWINGS

FIG. 1 is a plan view illustrating a dielectrophoresis apparatus according to a preferred embodiment of the present invention.
FIG. 2 is a schematic sectional view of the fluid chip taken along line II-II in FIG. 1.
FIG. 3 is a schematic sectional view of the fluid chip taken along line III-III of FIG. 1.

FIG. 4 is a block diagram illustrating a control unit according to the present preferred embodiment.

FIG. 5 is a flowchart illustrating a control voltage correction method according to the present preferred embodiment.

FIG. 6 is a graph illustrating an example of a correction coefficient according to the present preferred embodiment.

FIG. 7 is a plan view illustrating a dielectrophoresis apparatus according to a first modified example of the present preferred embodiment.

FIG. 8 is a flowchart illustrating a control voltage correction method according to the first modified example of the present preferred embodiment.

FIG. 9 is a graph showing frequency dependence of a separation rate of dielectric particles according to the first modified example of the present preferred embodiment.

FIG. 10 is a flowchart illustrating a control voltage correction method according to a second modified example of the present preferred embodiment.

DETAILED DESCRIPTION OF THE EXAMPLE EMBODIMENTS

Preferred embodiments of the present invention shall now be described with reference to the drawings. It is noted that in the drawings, the same or corresponding portions will be given the same reference signs and will not be repeatedly described. Also, in the present specification, an X axis, a Y axis, and a Z axis orthogonal to each other may be described in order to facilitate the understanding of the invention. Typically, the X-axis and the Y-axis are parallel to the horizontal direction, and the Z-axis is parallel to the vertical direction. Also, in the present specification, a plan view typically indicates that an object is viewed from the vertical direction.

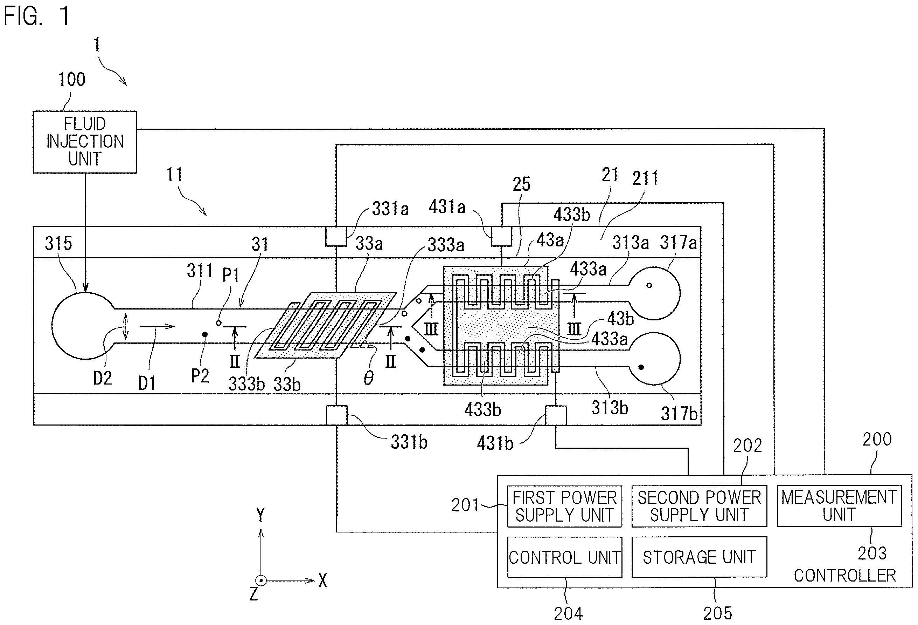

A dielectrophoresis apparatus 1 according to a preferred embodiment of the present invention will be described with reference to FIGS. 1 to 6. FIG. 1 is a plan view illustrating the dielectrophoresis apparatus 1.

As illustrated in FIG. 1, the dielectrophoresis apparatus 1 causes a dielectrophoretic force to act on dielectric particles P1 contained in a first fluid, thereby separating the dielectric particles P1 from other particles P2 and collecting the dielectric particles P1. The first fluid is, for example, a liquid. The first fluid is a fluid containing the dielectric particles P1 and the other particles P2. Typically, the first fluid is a buffer solution containing the dielectric particles P1 and the other particles P2. The dielectric particles P1 are, for example, microorganisms, cells, proteins, or nucleic acids. The microorganisms are, for example, fungi (for example, bacteria or true fungi) or a virus. The other particles P2 are, for example, particles different in type from the dielectric particles P1, or particles of the same type as the dielectric particles P1 and different in state. The particles in different states are, for example, living particles (for example, cells) and dead particles (for example, cells).

Specifically, the dielectrophoresis apparatus 1 includes a fluid chip 11. The fluid chip 11 causes a dielectrophoretic force to act on the dielectric particles P1 contained in the first fluid, thereby separating the dielectric particles P1 from the other particles P2 and collecting the dielectric particles P1. The diameter of the dielectric particles P1 is, for example, several ten μm or more and tens μm or less.

The fluid chip 11 includes a substrate 21, a channel 31, a pair of second electrodes 33a and 33b, a pair of first electrodes 43a and 43b, a pair of second electrode pad portions 331a and 331b, and a pair of first electrode pad portions 431a and 431b.

The material of the substrate 21 is, for example, glass or silicon. However, the material of the substrate 21 is not limited to quartz glass. The substrate 21 has a substantially rectangular flat plate shape. However, the shape of the substrate 21 is not limited to the substantially rectangular flat plate shape.

The channel 31 is disposed on the side of one principal surface 211 of the pair of principal surfaces of the substrate 21. In the example of FIG. 1, one principal surface 211 of the substrate 21 is the upper surface of the substrate 21, and the other principal surface of the substrate 21 is the lower surface of the substrate 21.

The first fluid or the second fluid can be injected into the channel 31. The second fluid is the same type of fluid as a fluid obtained by excluding the dielectric particles P1 and the other particles P2 from the first fluid. The second fluid is, for example, a liquid. The second fluid is typically a buffer solution. For example, an electrical resistivity of the second fluid is substantially equal to an electrical resistivity of the first fluid.

The first fluid or the second fluid flows through the channel 31. The channel 31 includes a separation channel 311 and a pair of collection channels 313a and 313b. Also, the fluid chip 11 further includes a supply portion 315, a first collection portion 317a, and a second collection portion 317b.

The separation channel 311 extends linearly along a direction D1. The width of the separation channel 311 in a direction D2 is, for example, microscale. The direction D2 is substantially orthogonal to the direction D1 along the substrate 21. One end of the separation channel 311 is connected to the supply portion 315. The supply portion 315 supplies the first fluid or the second fluid to the separation channel 311. The supply portion 315 has, for example, an opening. The supply portion 315 is connected to, for example, a fluid injection unit 100 (fluid injector) which is the supply source of the first fluid or the second fluid by a tube. That is, the dielectrophoresis apparatus 1 further includes the fluid injection unit 100. The fluid injection unit 100 injects the first fluid or the second fluid into the fluid chip 11. Specifically, the fluid injection unit 100 injects the first fluid or the second fluid into the supply portion 315. The fluid injection unit 100 is, for example, a syringe pump. The syringe pump includes, for example, a motor, a syringe, and a plunger.

Also, the channel 31 is branched into a collection channel 313a and a collection channel 313b at the other end of the separation channel 311.

The collection channel 313a is a channel into which the dielectric particles P1 from the separation channel 311 flow. The collection channel 313b is a channel into which the other particles P2 from the separation channel 311 flow. One end of the collection channel 313a and one end of the collection channel 313b are connected to the other end of the separation channel 311. The other end of the collection channel 313a is connected to the first collection portion 317a. The other end of the collection channel 313b is connected to the second collection portion 317b. The first collection portion 317a collects the dielectric particles P1 to be separated. The first collection portion 317a may have, for example, an opening and supply a solution containing the dielectric particles P1 from the fluid chip 11 to the outside. The second collection portion 317b collects the other particles P2 that are non-separation targets. The second collection portion 317b may have, for example, an opening and supply a solution containing the other particles P2 from the fluid chip 11 to the outside.

When a control voltage Vcn is applied, the second electrodes 33a and 33b can apply a dielectrophoretic force to the dielectric particles P1 contained in the first fluid injected into the channel 31. The control voltage Vcn is an AC voltage. The material of the second electrodes 33a and 33b is a metal such as aluminum.

The second electrodes 33a and 33b intersect the channel 31 (the separation channel 311) at an acute angle $\theta$ in plan view. Each of the second electrodes 33a and 33b is a comb-shaped electrode. The second electrode 33a and the second electrode 33b are electrically separated from each other.

The second electrode 33a includes a plurality of second line electrodes 333a arranged in a comb shape. The plurality of second line electrodes 333a are arranged at equal intervals in the direction D1. The direction D1 indicates a direction in which the channel 31 (separation channel 311) extends. The plurality of second line electrodes 333a intersect the channel 31 (separation channel 311) at the acute angle $\theta$ in plan view. The second line electrode 333a crosses the channel 31 such as to form the acute angle $\theta$ with respect to the channel 31 (separation channel 311). The second line electrode 333a is connected to the second electrode pad portion 331a.

The second electrode 33b includes a plurality of second line electrodes 333b arranged in a comb shape. The plurality of second line electrodes 333b are arranged at equal intervals in the direction D1. The plurality of second line electrodes 333b intersect the channel 31 (separation channel 311) at the acute angle $\theta$ in plan view. The second line electrode 333b crosses the channel 31 such as to form the acute angle $\theta$ with respect to the channel 31 (separation channel 311). The second line electrode 333b is connected to the second electrode pad portion 331b.

The second line electrodes 333a and the second line electrodes 333b are alternately arranged at intervals in the direction D1.

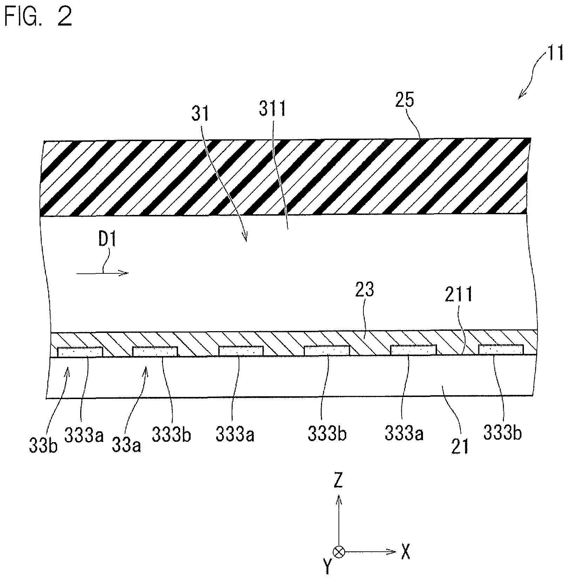

FIG. 2 is a schematic sectional view taken along line II-II in FIG. 1. As illustrated in FIG. 2, the second electrodes 33a and 33b are disposed between the principal surface 211 of the substrate 21 and the channel 31 (the separation channel 311). Specifically, the second line electrodes 333a and 333b are disposed between the principal surface 211 of the substrate 21 and the channel 31 (the separation channel 311).

The fluid chip 11 further includes an insulating protective film 23 and a channel cover 25. The insulating protective film 23 covers the second electrodes 33a and 33b. The insulating protective film 23 is, for example, an oxide film or a nitride film. The oxide film is, for example, a silicon oxide film ($SiOx$). The nitride film is, for example, a silicon nitride film. Since the second electrodes 33a and 33b are covered with the insulating protective film 23, an electrochemical reaction occurring at the interface between the electrode metal and the liquid can be suppressed, and deterioration and wear of the electrode metal over time can be suppressed.

The material of the channel cover 25 is, for example, silicone such as dimethylpolysiloxane (PDMS). The channel cover 25 and an upper surface of the insulating protective film 23 constitute the channel 31.

Returning to FIG. 1, the width of the substrate 21 in the direction D2 is larger than the width of the channel cover 25 in the direction D2. At least a part of the second electrode pad portion 331a and at least a part of the second electrode pad portion 331b are disposed outside the channel cover 25. Also, portions of the second electrode pad portions 331a and 331b which are disposed outside the channel cover 25 are not covered with the insulating protective film 23.

The second electrode pad portion 331a is connected to the second electrode 33a. The second electrode pad portion 331b is connected to the second electrode 33b.

When a measurement voltage Vm is applied to the first electrodes 43a and 43b, an impedance IM1 between the first electrodes 43a and 43b is measured. The measurement voltage Vm is an AC voltage. The material of the first electrodes 43a and 43b is a metal such as aluminum.

The first electrodes 43a and 43b are substantially orthogonal to the channel 31 (the separation channel 311) in plan view. Each of the first electrodes 43a and 43b is a comb-shaped electrode. The first electrode 43a and the first electrode 43b are electrically separated from each other.

The first electrodes 43a and 43b are separated from the second electrodes 33a and 33b in the direction D1. Specifically, the first electrodes 43a and 43b are disposed downstream of the second electrodes 33a and 33b.

The first electrode 43a includes a plurality of first line electrodes 433a arranged in a comb shape. The first electrode 43b includes a plurality of first line electrodes 433b arranged in a comb shape. The plurality of first line electrodes 433a and the plurality of first line electrodes 433b extend along the direction D2. The first line electrodes 433a and the first line electrodes 433b are alternately arranged at intervals in the direction D1.

Some of the plurality of first line electrodes 433a are substantially orthogonal to the collection channel 313a in plan view and are arranged at equal intervals in the direction D1. Some of the plurality of first line electrodes 433b are substantially orthogonal to the collection channel 313a in plan view and are arranged at equal intervals in the direction D1.

Other parts of the plurality of first line electrodes 433a are substantially orthogonal to the collection channel 313b in plan view and are arranged at equal intervals in the direction D1. Other parts of the plurality of first line electrodes 433b are substantially orthogonal to the collection channel 313b in plan view and are arranged at equal intervals in the direction D1.

The first line electrode 433a is connected to the first electrode pad portion 431a. The first line electrode 433a crosses the channel 31 (the collection channel 313a) at a substantially right angle. The first line electrode 433b is connected to the first electrode pad portion 431b. The first line electrode 433b crosses the channel 31 (the collection channel 313b) at a substantially right angle.

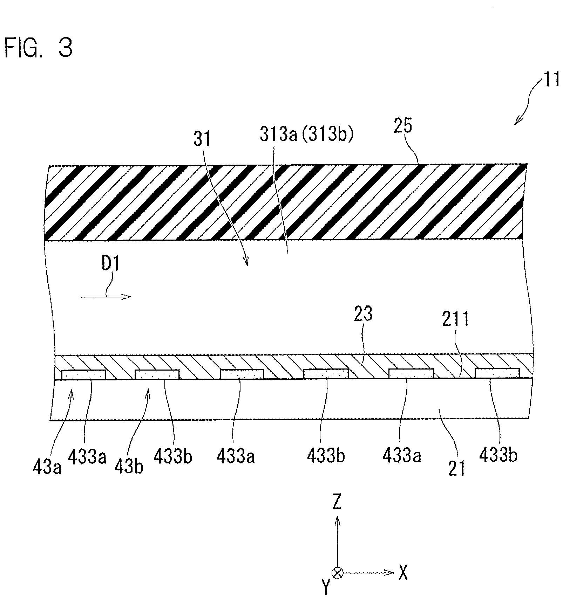

FIG. 3 is a schematic sectional view taken along line III-III in FIG. 1. FIG. 3 illustrates the first electrodes 43a and 43b on the collection channel 313a side. As illustrated in FIG. 3, the first electrodes 43a and 43b are disposed between the principal surface 211 of the substrate 21 and the channel 31 (the collection channel 313a). Specifically, the first line electrodes 433a and 433b are disposed between the principal surface 211 of the substrate 21 and the channel 31 (the collection channel 313a).

The insulating protective film 23 covers the first electrodes 43a and 43b. The channel cover 25 and the upper surface of the insulating protective film 23 constitute the channel 31 (the collection channel 313a).

It is noted that the first line electrodes 433a and 433b on the collection channel 313b side are configured similarly to the first line electrodes 433a and 433b on the collection channel 313a side.

Returning to FIG. 1, at least a part of the first electrode pad portion 431a and at least a part of the first electrode pad portion 431b are disposed outside the channel cover 25. Also, the portions of the first electrode pad portions 431a and 431b disposed outside the channel cover 25 are not covered with the insulating protective film 23. The first electrode pad portion 431a is connected to the first electrode 43a. The first electrode pad portion 431b is connected to the first electrode 43b.

The dielectrophoresis apparatus 1 further includes a controller 200. The controller 200 controls the fluid chip 11 and the fluid injection unit 100.

Specifically, the controller 200 includes a first power supply unit 201, a second power supply unit 202, a measurement unit 203 (measurer), a control unit 204, and a storage unit 205.

The second power supply unit 202 is electrically connected to the second electrode pad portions 331a and 331b. The second power supply unit 202 applies the control voltage Vcn corresponding to the dielectric particles P1 to the second electrodes 33a and 33b through the second electrode pad portions 331a and 331b. That is, the second power supply unit 202 applies the control voltage Vcn corresponding to the dielectric particles P1 between the second electrode 33a and the second electrode 33b through the second electrode pad portions 331a and 331b. The control voltage Vcn is an AC voltage. The second power supply unit 202 is, for example, a signal generator such as a function generator.

The control voltage Vcn corresponding to the dielectric particles P1 is a voltage that has a frequency that generates an electric field that specifically applies a dielectrophoretic force (attractive force) to the dielectric particles P1 and has a magnitude that does not destroy the dielectric particles P1.

Specifically, the frequency of the control voltage Vcn is set such that a positive dielectrophoretic force (attractive force) acts on the dielectric particles P1 by the second electrodes 33a and 33b. Therefore, a positive dielectrophoretic force (attractive force) acts on the dielectric particles P1, and the dielectric particles P1 flow in the separation channel 311 along the extending direction of the second electrodes 33a and 33b (the second line electrodes 333a and 333b) while being attracted to the second electrodes 33a and 33b (the second line electrodes 333a and 333b) and are collected in the first collection portion 317a through the collection channel 313a. On the other hand, the frequency of the control voltage Vcn is set such that no dielectrophoretic force acts on the other particles P2, or even if a positive or negative dielectrophoretic force (attractive force or repulsive force) acts on the other particles P2, the dielectrophoretic force becomes relatively small. Therefore, the other particles P2 are caused to flow by the flow in the direction D1 in the separation channel 311 and are collected in the second collection portion 317b through the collection channel 313b.

As described above, with reference to FIGS. 1 to 3, the control voltage Vcn that causes the dielectrophoretic force to act on the dielectric particles P1 contained in the first fluid is applied to the fluid chip 11. Then, the fluid chip 11 applies a positive dielectrophoretic force (attractive force) to the dielectric particles P1 to separate the dielectric particles P1 from the other particles P2 and collect the dielectric particles P1 in the first collection portion 317a.

The first power supply unit 201 generates the measurement voltage Vm. Then, the first power supply unit 201 applies the measurement voltage Vm to the first electrodes 43a and 43b through the first electrode pad portions 431a and 431b. The first power supply unit 201 is, for example, a signal generator such as a function generator.

The measurement unit 203 measures the impedance IM1 between the first electrodes 43a and 43b through the second fluid. In this case, the measurement unit 203 measures the impedance IM1 for each frequency while changing the frequency of the measurement voltage Vm.

In a state where the measurement voltage Vm is applied between the first electrodes 43a and 43b by the first power supply unit 201, the measurement unit 203 measures the impedance IM1 between the pair of first electrodes 43a and 43b through the second fluid injected into the channel 31. Specifically, the measurement unit 203 measures the current flowing between the first electrodes 43a and 43b through the first electrodes 43a and 43b in a state where the measurement voltage Vm is applied between the first electrodes 43a and 43b by the first power supply unit 201. The measurement unit 203 calculates the impedance IM1 between the first electrodes 43a and 43b from the measurement voltage Vm and the current measured through the first electrodes 43a and 43b. The measurement unit 203 is, for example, a measuring instrument such as an oscilloscope.

The measurement unit 203 outputs data indicating the frequency of the measurement voltage Vm and the impedance IM1 between the first electrodes 43a and 43b to the control unit 204.

The control unit 204 controls the first power supply unit 201, the second power supply unit 202, the measurement unit 203, the storage unit 205, and the fluid injection unit 100. The control unit 204 includes, for example, a processor. The processor is, for example, a central processing unit (CPU) or a micro processing unit (MPU) .

The storage unit 205 stores data and computer programs. The storage unit 205 is, for example, a storage device. The storage device includes a main storage device such as a semiconductor memory and an auxiliary storage device such as a semiconductor memory, a solid state drive, and/or a hard disk drive. The storage may include removable media. The storage device corresponds to an example of a non-transitory computer readable storage medium.

The controller 200 may include, for example, a source measure unit.

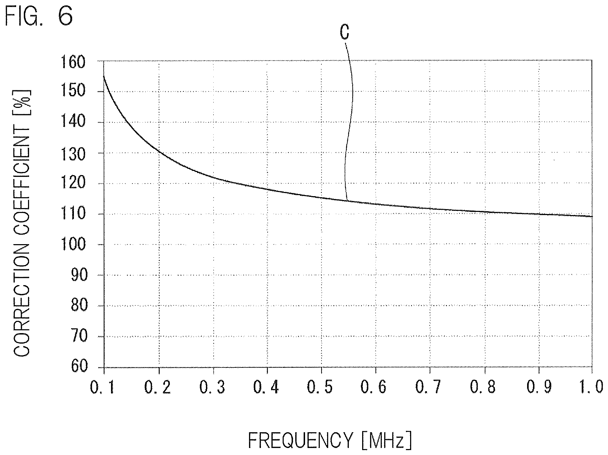

Next, a control voltage correction method according to the present preferred embodiment will be described with reference to FIGS. 1 and 6. In the control voltage correction method, the control voltage Vcn that causes the dielectrophoretic force to act on the dielectric particles P1 included in the first fluid injected into the fluid chip 11 is corrected. In the present preferred embodiment, by executing the control voltage correction method, it is possible to reduce the influence of the parasitic component in the fluid chip 11 on the separation performance and the collection performance of the dielectric particles P1 from the other particles P2 in the fluid chip 11.

Prior to a specific description of the correction, first, the parasitic components of the fluid chip 11 will be described. The parasitic components of the fluid chip 11 include a device parasitic component caused by the fluid chip 11 itself and a fluid parasitic component. The device parasitic component includes the parasitic resistance of the electrode metal, the parasitic resistance and the parasitic capacitance of the insulating protective film 23, and a parasitic resistance and a parasitic capacitance at an interface between the electrode metal and the fluid. The fluid parasitic component is the parasitic resistance and the parasitic capacitance of the fluid. The electrode metal indicates the first electrodes 43a and 43b or the second electrodes 33a and 33b. The fluid indicates the first fluid or the second fluid.

The control voltage Vcn applied to the first fluid is attenuated by a device parasitic component, and the attenuation amount has frequency dependence due to the presence of a parasitic capacitance (electrostatic capacitance component). Therefore, when the control voltage Vcn having a specific voltage value Vx is applied to the second electrodes 33a and 33b, the voltage value of the voltage actually applied to the first fluid is different from the specific voltage value Vx that is the target value of the voltage applied to the first fluid.

Therefore, the voltage value of the control voltage Vcn is corrected by adding the voltage value attenuated by the device parasitic component to the specific voltage value Vx. Specifically, as indicated by equation (1), a correction voltage value Vy is calculated by multiplying the specific voltage value Vx by a correction coefficient C. The correction coefficient C is a real number larger than 1. By applying the control voltage Vcn having the correction voltage value Vy to the first fluid, the voltage value of the voltage actually applied to the first fluid becomes the specific voltage value Vx which is the target value.

$$Vy = C \times Vx \quad \ldots \quad (1)$$

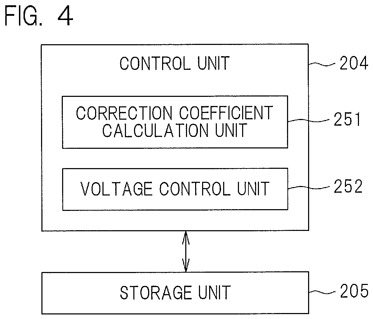

Hereinafter, the control voltage correction method will be described in detail. FIG. 4 is a block diagram illustrating the control unit 204. As illustrated in FIG. 4, the control unit 204 includes a correction coefficient calculation unit 251 (correction coefficient calculator) and a voltage control unit 252 (voltage controller). Specifically, the processor of the control unit 204 functions as the correction coefficient calculation unit 251 and the voltage control unit 252 by executing computer programs stored in the storage device of the storage unit 205.

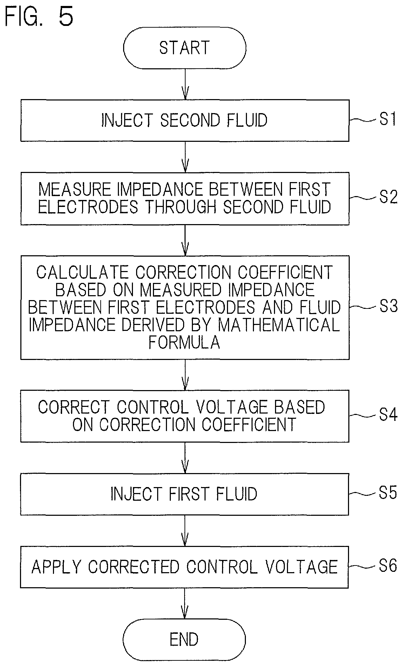

FIG. 5 is a flowchart illustrating a control voltage correction method according to the present preferred embodiment. As illustrated in FIG. 5, the control voltage correction method includes steps S1 to S6.

As illustrated in FIGS. 1 and 5, first, in step S1, the fluid injection unit 100 injects the second fluid into the fluid chip 11. Specifically, the fluid injection unit 100 injects the second fluid into the channel 31 through the supply portion 315 by injecting the second fluid into the supply portion 315.

Next, in step S2, the first power supply unit 201 applies the measurement voltage Vm between the pair of first electrodes 43a and 43b, and the measurement unit 203 measures the impedance IM1 between the pair of first electrodes 43a and 43b through the second fluid injected into the channel 31. The measurement voltage Vm has the specific voltage value Vx. The measurement voltage Vm is an AC voltage. Therefore, the specific voltage value Vx is indicated by an effective value.

Preferably, the measurement unit 203 measures the impedance IM1 for each frequency between the pair of first electrodes 43a and 43b through the second fluid while changing the frequency of the measurement voltage Vm. Then, the storage unit 205 stores the impedance IM1 between the pair of first electrodes 43a and 43b for each frequency of the measurement voltage Vm.

Next, as illustrated in FIGS. 4 and 5, in step S3, the correction coefficient calculation unit 251 calculates the correction coefficient C based on the impedance IM1 between the pair of first electrodes 43a and 43b measured in step S2 and a fluid impedance IM2 derived by a mathematical formula. The fluid impedance IM2 is the impedance of the first fluid or the impedance of the second fluid. The impedance of the first fluid is substantially equal to the impedance of the second fluid.

Preferably, the correction coefficient calculation unit 251 calculates the correction coefficient C for each frequency of the measurement voltage Vm based on the impedance IM1 between the pair of first electrodes 43a and 43b and the fluid impedance IM2 derived by the mathematical formula.

FIG. 6 is a graph illustrating the correction coefficient C. Referring to FIG. 6, the correction coefficient C is indicated as a percentage [%] for convenience in order to facilitate understanding. The abscissa represents the frequency [MHz] of the measurement voltage Vm, and the ordinate represents the correction coefficient C [%]. As illustrated in FIG. 6, the correction coefficient calculation unit 251 calculates the correction coefficient C for each frequency.

The correction coefficient C is indicated by equation (2) using a voltage output efficiency VOE. The voltage output efficiency VOE is expressed by equation (3). Therefore, the voltage output efficiency VOE indicates the ratio of "the voltage value of the voltage actually applied to the second fluid when the measurement voltage Vm having the specific voltage value Vx is applied to the first electrodes 43a and 43b" to "the specific voltage value Vx that is the target value of the voltage applied to the second fluid." In other words, the voltage output efficiency VOE indicates the ratio of "the voltage value of the voltage actually applied to the first fluid when the control voltage Vcn having the specific voltage value Vx is applied to the second electrodes 33a and 33b" to "the specific voltage value Vx that is the target value of the voltage applied to the first fluid." This is because the electrical resistivity of the first fluid is substantially equal to the electrical resistivity of the second fluid.

$$C = 1/VOE \quad \ldots \quad (2)$$

$$VOE = IM2/IM1 \quad \ldots \quad (3)$$

Returning to FIG. 5, next, in step S4, the voltage control unit 252 corrects the control voltage Vcn applied between the pair of second electrodes 33a and 33b based on the correction coefficient C. Specifically, the voltage control unit 252 corrects the control voltage Vcn having the specific voltage value Vx based on the correction coefficient C. That is, the voltage control unit 252 corrects the specific voltage value Vx based on the correction coefficient C and calculates a correction voltage value Vy. Specifically, the voltage control unit 252 calculates the correction voltage value Vy by equation (1) given above. In this case, the voltage control unit 252 selects the correction coefficient C corresponding to a frequency fx (described as "the specific frequency fx" hereinafter) preset for the control voltage Vcn among the correction coefficients C having frequency dependence (FIG. 6) .

Next, in step S5, the fluid injection unit 100 injects the first fluid into the fluid chip 11. Specifically, the fluid injection unit 100 injects the first fluid into the channel 31 through the supply portion 315 by injecting the first fluid into the supply portion 315.

Next, in step S6, the voltage control unit 252 controls the second power supply unit 202 such as to output the corrected control voltage Vcn. As a result, the second power supply unit 202 applies the corrected control voltage Vcn between the second electrodes 33a and 33b. Specifically, the second power supply unit 202 applies the control voltage Vcn having the correction voltage value Vy and the specific frequency fx between the second electrodes 33a and 33b.

As described above with reference to FIG. 5, according to the present preferred embodiment, by correcting the control voltage Vcn by the correction coefficient C, it is possible to reduce the influence of the device parasitic component on the separation performance and the collection performance of the dielectric particles P1 from the other particles P2 contained in the first fluid.

In particular, when calculating the correction coefficient C, the correction coefficient calculation unit 251 uses the fluid impedance IM2 derived by a mathematical expression instead of the actual measurement value. Therefore, it is not required to provide an inspection electrode and an inspection channel for calculating the correction coefficient C. Therefore, it is possible to suppress an increase in the size of the fluid chip 11.

Therefore, according to the present preferred embodiment, it is possible to execute correction of the control voltage Vcn while suppressing an increase in the size of the fluid chip 11.

Also, in the present preferred embodiment, the impedance IM1 between the first electrodes 43a and 43b is measured through the second fluid (step S2). In this case, the second fluid is the same fluid as a fluid obtained by excluding the dielectric particles P1 and the other particles P2 from the first fluid. Therefore, it is only necessary to prepare the second fluid that is a fluid before mixing the dielectric particles P1 and the other particles P2. As a result, it is not required to separately prepare an inspection liquid having different electrical characteristics. Therefore, the cost for calculating the correction coefficient C can be reduced. Also, it is possible to prevent surface contamination from being newly generated due to inspection fluids having different electrical characteristics, and it is possible to prevent clogging of a channel or the like due to particle mixing.

It is noted that, in a reference example, the inspection liquid is a liquid such as a sodium chloride aqueous solution having an electrical resistivity lower than that of the first fluid. That is, it is required to separately prepare a liquid having a high electrical conductivity as the inspection liquid. Then, the inspection liquid is injected into the inspection channel, and an impedance IMa is measured using the inspection electrode through the inspection liquid. On the other hand, the sample liquid is injected into the main channel, and an impedance IMb is measured using the main electrode through the sample liquid. Then, a voltage output efficiency VOEx (= (IMb-IMa)/IMb) is calculated. Further, the correction coefficient Cx (= 1/VOEx) is calculated.

Further, in the present preferred embodiment, it is not required to prepare an inspection liquid having a high electrical conductivity, to inject the inspection liquid into the inspection channel, and to measure the impedance IMa using the inspection electrode through the inspection liquid. Therefore, it is possible to reduce the cost, labor, and environmental burden for calculating the correction coefficient C.

Further, in the present preferred embodiment, after injecting the second fluid for measuring the impedance IM1 into the channel 31 of the fluid chip 11, the fluid injection unit 100 injects the first fluid containing the dielectric particles P1 into the channel 31 of the fluid chip 11 (step S5). That is, before the injection of the first fluid containing the dielectric particles P1 which are the capture target, a preliminary operation of filling the channel 31 with the same second fluid obtained by excluding the dielectric particles P1 and the other particles P2 from the first fluid is executed. Then, the impedance IM1 is measured after the filling of the second fluid is completed and before the injection of the first fluid, or during the filling of the second fluid. Therefore, the operation for calculating the correction coefficient C can be performed during the preliminary operation performed before the actual operation for capturing the dielectric particles P1. As a result, in the present preferred embodiment, as compared with the case of separately providing the dedicated operation time for calculating the correction coefficient Cx, the inspection electrode, and the like as in the reference example, it is possible to seamlessly perform the operation from calculating the correction coefficient C to the actual operation for capturing the dielectric particles P1. Therefore, the time difference between the correction of the control voltage Vcn and the capturing of the dielectric particles P1 by the application of the control voltage Vcn can be substantially eliminated, and the accuracy of the correction can be improved.

Further, in the present preferred embodiment, the pair of first electrodes 43a and 43b used for measuring the impedance IM1 is disposed downstream of the flow of the first fluid or the second fluid with respect to the pair of second electrodes 33a and 33b to which the control voltage Vcn for capturing the dielectric particles P1 is applied. Therefore, according to the present preferred embodiment, the impedance IM1 can be measured even in a period in which the first fluid is injected into the channel 31 and the dielectric particles P1 are captured by the second electrodes 33a and 33b. Therefore, the correction coefficient C can be corrected during the period in which the dielectric particles P1 are captured. As a result, the correction voltage value Vy of the control voltage Vcn can be corrected according to the capturing situation of the dielectric particles P1. Therefore, it is possible to further reduce the influence of the device parasitic component on the separation performance and the collection performance of the dielectric particles P1 from the other particles P2 contained in the first fluid.

Further, in the present preferred embodiment, the mathematical formula for deriving the fluid impedance IM2 is a theoretical formula. The theoretical formula includes the electrical resistivity or the electrical conductivity of the first fluid, or the theoretical formula includes the electrical resistivity or the electrical conductivity of the second fluid. Therefore, the fluid impedance IM2 can be easily derived by the theoretical formula.

Equation (4) is an example of a theoretical formula. In equation (4), "$\rho$" represents the electrical resistivity of the first fluid or the second fluid. "$\sigma$" represents the electrical conductivity of the first fluid or the second fluid. "$\rho$" and "$\sigma$" are values specific to a substance and are determined by the type of the first fluid or the second fluid. "L" represents the length of the first fluid or the second fluid. "S" represents a cross-sectional area of the first fluid or the second fluid. Specifically, "L" and "S" are determined based on the structures and dimensions of the first electrodes 43a and 43b (first line electrodes 433a and 433b) that measure the fluid impedance IM2.

$$\mathrm{IM2} \;=\; \rho \times (\mathrm{L/S}) \;=\; (1/\sigma) \times (\mathrm{L/S}) \;\;\ldots\;\; (4)$$

Preferably, a mathematical formula for deriving the fluid impedance IM2 is an empirical formula. The empirical formula is a function determined by the electrical characteristics of the fluid chip 11 and the dielectrophoresis characteristics of the dielectric particles P1. Therefore, the fluid impedance IM2 can be derived according to the electrical characteristics of the fluid chip 11 and the dielectrophoresis characteristics of the dielectric particles P1. As a result, the correction coefficient C can be calculated more appropriately using the fluid impedance IM2.

Equation (5) is an example of an empirical formula. A function F (IM1) is a function determined by the electrical characteristics of the fluid chip 11 and the dielectrophoresis characteristics of the dielectric particles P1. The function F (IM1) has the impedance IM1 between the first electrodes 43a and 43b measured by the measurement unit 203 as a variable. For example, the function F (IM1) is derived based on the relationship between the electrical characteristics of the fluid chip 11 and the dielectrophoresis characteristics of the dielectric particles P1, and the resistance value of the first fluid. It is noted that, as another example of the empirical formula, a function that does not have the impedance IM1 as a variable may be used.

$$IM2 = F(IM1) \quad ... \quad (5)$$

Further, in the present preferred embodiment, the correction coefficient calculation unit 251 preferably calculates the correction coefficient C every time the frequency of the control voltage Vcn is changed. Also, the voltage control unit 252 preferably corrects the control voltage Vcn based on the correction coefficient C calculated according to the change in the frequency of the control voltage Vcn. According to this preferred example, the control voltage Vcn can be appropriately corrected according to the frequency for each frequency of the control voltage Vcn.

(First Modified Example)

A first modified example of the present preferred embodiment will be described with reference to FIGS. 4 and 7 to 9. The first modified example differs from the above-described preferred embodiment described with reference to FIG. 5 mainly in that the correction coefficient C is changed by feeding back the separation characteristics of the dielectric particles P1. Hereinafter, differences between the first modified example and the above preferred embodiment will be mainly described.

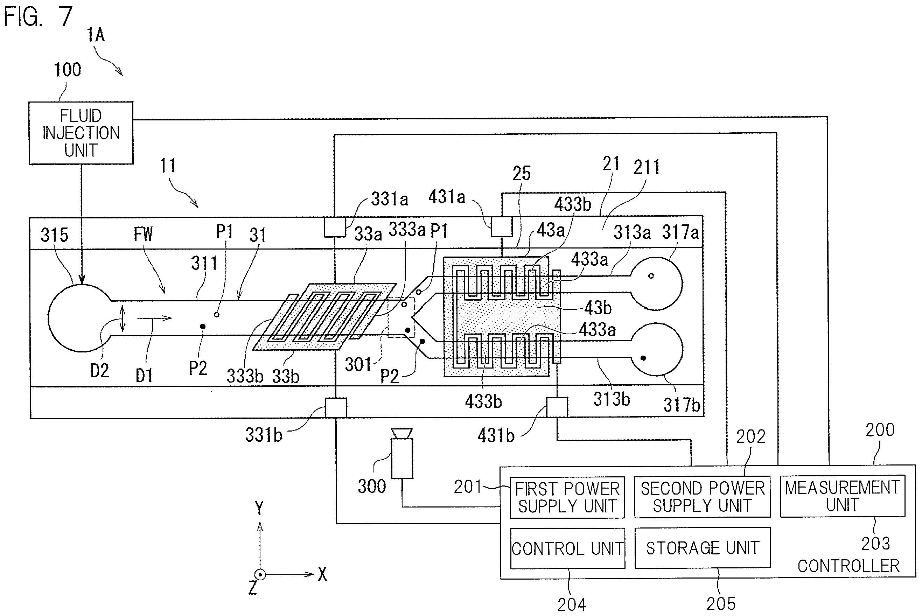

FIG. 7 is a plan view illustrating a dielectrophoresis apparatus 1A according to a first modified example of the present preferred embodiment. As illustrated in FIG. 7, the dielectrophoresis apparatus 1A further includes an imaging unit 300 (imager) in addition to the configuration of the dielectrophoresis apparatus 1 of FIG. 1. The imaging unit 300 is, for example, a camera. The camera includes, for example, an image sensor. The imaging unit 300 images the dielectric particles P1 in a region of interest 301. The region of interest 301 is a region downstream of the flow of the first fluid or the second fluid with respect to the pair of second electrodes 33a and 33b. The region of interest 301 is a region upstream of the flow of the first fluid or the second fluid with respect to the pair of first electrodes 43a and 43b. Specifically, the region of interest 301 includes a region where the separation channel 311 branches into the collection channel 313a and the collection channel 313b. That is, the region of interest 301 includes a downstream end portion of the separation channel 311, an upstream end portion of the collection channel 313a, and an upstream end portion of the collection channel 313b. In the example of FIG. 7, the region of interest 301 includes the upstream end portion of the collection channel 313a and the upstream end portion of the collection channel 313b and has the downstream end portion of the separation channel 311 as the main region.

The region of interest 301 corresponds to an example of the "region" of the present invention.

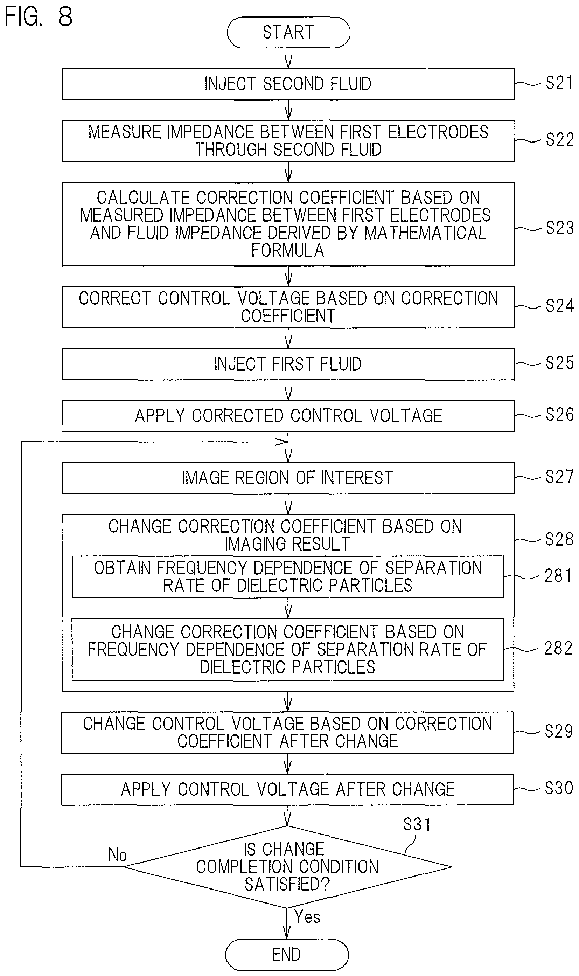

FIG. 8 is a flowchart illustrating a control voltage correction method according to the first modified example. As illustrated in FIG. 8, the control voltage correction method includes steps S21 to S31.

As illustrated in FIG. 8, steps S21 to S26 are executed. Steps S21 to S26 are similar to steps S1 to S6 in FIG. 5, respectively.

Next, as illustrated in FIGS. 7 and 8, in step S27, the imaging unit 300 images the dielectric particles P1 in the region of interest 301.

Next, as illustrated in FIGS. 4 and 8, in step S28, the correction coefficient calculation unit 251 changes the correction coefficient C based on the imaging result of the dielectric particles P1. Therefore, according to the first modified example, the correction coefficient calculation unit 251 can calculate the correction coefficient C in which the state of separation of the dielectric particles P1 by the second electrodes 33a and 33b is fed back. As a result, in the fluid chip 11, the separation performance and the collection performance of the dielectric particles P1 from the other particles P2 can be further improved.

Specifically, step S28 includes step S281 and step S282.

In step S281, when the dielectric particles P1 are separated from the other particles P2 by applying the control voltage Vcn to the pair of second electrodes 33a and 33b, the correction coefficient calculation unit 251 obtains the frequency dependence of a separation rate SP of the dielectric particles P1 based on the imaging result of the dielectric particles P1. The separation rate SP of the dielectric particles P1 is "a number K of the dielectric particles P1 flowing into the collection channel 313a per certain time" with respect to "a number M of the dielectric particles P1 reaching the region of interest 301 per certain time." That is, SP = K/M.

Specifically, the imaging unit 300 images the dielectric particles P1 in the region of interest 301 while the second power supply unit 202 changes the frequency of the control voltage Vcn. As a result, a captured image showing the imaging result of the dielectric particles P1 is obtained for each frequency. Then, the correction coefficient calculation unit 251 analyzes the captured image of the dielectric particles P1 obtained for each frequency and calculates the separation rate SP for each frequency. As a result, information indicating the frequency dependence of the separation rate SP of the dielectric particles P1 is obtained.

Next, in step S282, the correction coefficient calculation unit 251 changes the correction coefficient C based on the frequency dependence of the separation rate SP of the dielectric particles P1.

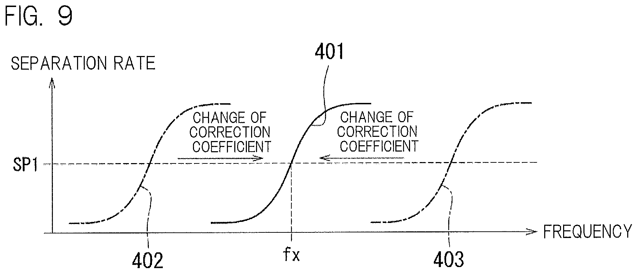

FIG. 9 is a graph showing the frequency dependence of the separation rate SP of the dielectric particles P1. The abscissa represents the frequency of the control voltage Vcn. The ordinate represents the separation rate SP. As shown in FIG. 9, the correction coefficient calculation unit 251 calculates pieces of information 401, 402, and 403 indicating the frequency dependence of the separation rate SP based on the captured image by the imaging unit 300 and repeats the change of the correction coefficient C until a target separation rate SP1 is obtained at the specific frequency fx which is the target frequency. In the example of FIG. 9, the frequency dependence of the separation rate SP indicated by the information 401 achieves the target separation rate SP1 at the specific frequency fx. On the other hand, since the frequency dependence of the separation rate SP indicated by the information 402 and the information 403 has not achieved the target separation rate SP1 at the specific frequency fx, the change of the correction coefficient C is repeated until the frequency dependence of the separation rate SP indicated by the information 401 is obtained. It is noted that, in the example of FIG. 9, the target separation rate SP1 is 0.5 (50%) but the target separation rate SP1 is not limited thereto.

Next, in step S29, the voltage control unit 252 changes the control voltage Vcn based on the correction coefficient C after the change.

Next, in step S30, the voltage control unit 252 controls the second power supply unit 202 such as to output the changed control voltage Vcn. As a result, the second power supply unit 202 applies the changed control voltage Vcn between the second electrodes 33a and 33b. Specifically, the second power supply unit 202 applies the control voltage Vcn having the changed correction voltage value Vy and the specific frequency fx between the second electrodes 33a and 33b.

Next, in step S31, the correction coefficient calculation unit 251 determines whether or not the change completion condition of the correction coefficient C is satisfied. The change completion condition is that the frequency dependence of the separation rate SP of the dielectric particles P1 satisfies a predetermined condition. The predetermined condition is that the target separation rate SP1 is obtained at the specific frequency fx that is the target frequency, in the information indicating the frequency dependence of the separation rate SP.

When it is determined in step S31 that the change completion condition is not satisfied (No), the process proceeds to step S27. Therefore, imaging and the changing of the correction coefficient C are executed until the change completion condition is satisfied.

On the other hand, when it is determined in step S31 that the change completion condition is satisfied (Yes), the voltage correction method ends.

(Second Modified Example)

A second modified example of the present preferred embodiment will be described with reference to FIGS. 4, 7, and 10. The second modified example differs from the first modified example described with reference to FIG. 8 mainly in that the correction coefficient C is calculated based on the impedance IM1 and the fluid impedance IM2 between the pair of first electrodes 43a and 43b measured through the first fluid. Hereinafter, differences between the second modified example and the above first modified example will be mainly described.

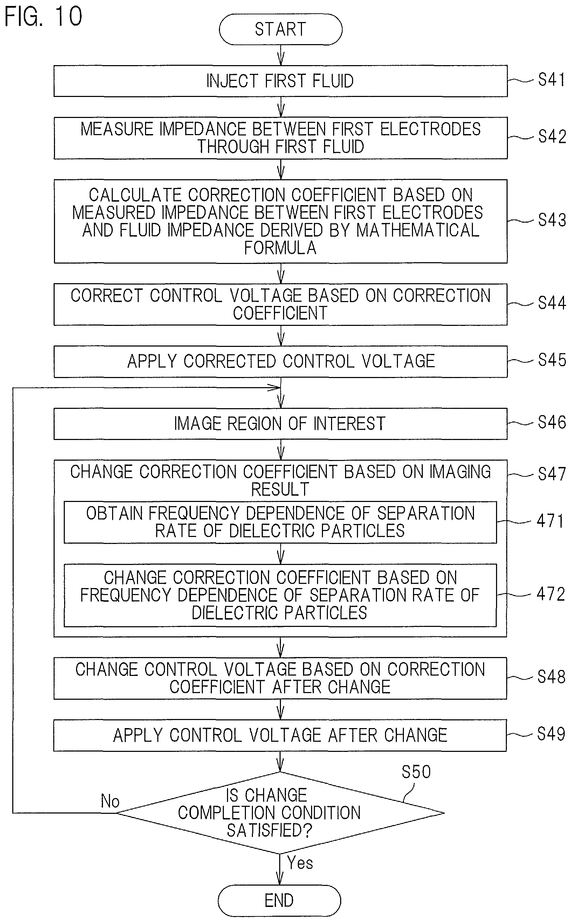

FIG. 10 is a flowchart illustrating a control voltage correction method according to the second modified example. As illustrated in FIG. 10, the control voltage correction method includes steps S41 to S50.

As illustrated in FIGS. 7 and 10, first, in step S41, the fluid injection unit 100 injects the first fluid into the fluid chip 11. Specifically, the fluid injection unit 100 injects the first fluid into the channel 31 through the supply portion 315 by injecting the first fluid into the supply portion 315.

Next, in step S42, the first power supply unit 201 applies the measurement voltage Vm between the pair of first electrodes 43a and 43b, and the measurement unit 203 measures the impedance IM1 between the pair of first electrodes 43a and 43b through the first fluid injected into the channel 31. The measurement voltage Vm has the specific voltage value Vx. The measurement voltage Vm is an AC voltage. Therefore, the specific voltage value Vx is indicated by an effective value.

Preferably, the measurement unit 203 measures the impedance IM1 for each frequency between the pair of first electrodes 43a and 43b through the first fluid while changing the frequency of the measurement voltage Vm. Then, the storage unit 205 stores the impedance IM1 between the pair of first electrodes 43a and 43b for each frequency of the measurement voltage Vm.

Next, as illustrated in FIGS. 4 and 10, in step S43, the correction coefficient calculation unit 251 calculates the correction coefficient C based on the impedance IM1 between the pair of first electrodes 43a and 43b measured in step S42 and the fluid impedance IM2 derived by the mathematical formula. Step S43 is similar to step S23 in FIG. 8.

Next, in step S44, the voltage control unit 252 corrects the control voltage Vcn applied between the pair of second electrodes 33a and 33b based on the correction coefficient C. Step S44 is similar to step S24 in FIG. 8.

Next, in step S45, the voltage control unit 252 controls the second power supply unit 202 such as to output the corrected control voltage Vcn. As a result, the second power supply unit 202 applies the corrected control voltage Vcn between the second electrodes 33a and 33b. Step S45 is similar to step S26 in FIG. 8.

Next, steps S46 to S50 are executed. Steps S46 to S50 are similar to steps S27 to S31 in FIG. 8, respectively. Also, step S471 and step S472 in FIG. 10 are similar to step S281 and step S282 in FIG. 8, respectively.

The preferred embodiment of the present invention has been described above with reference to the accompanying drawings. However, the present invention is not limited to the above preferred embodiment and can be implemented in various modes without departing from the gist thereof. Also, the plurality of constituent elements disclosed in the above preferred embodiment can be modified appropriately. For example, one constituent element among all constituent elements illustrated in one preferred embodiment may be added to the constituent elements of another preferred embodiment, or some constituent elements among all constituent elements illustrated in one preferred embodiment may be deleted from the preferred embodiment.

Also, the drawings schematically show the respective constituent elements mainly in order to facilitate understanding of the present invention, and the thickness, the length, the number, the interval, etc., of each constituent element shown in the figures may be different from the actual ones for convenience in creating the drawings. Also, the configuration of each constituent element illustrated in the above preferred embodiment are merely examples, and are not particularly limited, and various modifications can be made without substantially departing from the effects of the present invention.

(1) In the preferred embodiment described with reference to FIG. 5, the measurement unit 203 measures the impedance IM1 between the first electrodes 43a and 43b through the second fluid. However, the measurement unit 203 may measure the impedance IM1 between the first electrodes 43a and 43b through the first fluid. Then, the correction coefficient calculation unit 251 may calculate the correction coefficient C based on the impedance IM1 measured through the first fluid and the fluid impedance IM2 derived by the mathematical formula.

(2) Referring to FIGS. 1 to 3, the insulating protective film 23 may not be provided.

While preferred embodiments of the present invention have been described above, it is to be understood that variations and modifications will be apparent to those skilled in the art without departing from the scope and spirit of the present invention. The scope of the present invention, therefore, is to be determined solely by the following claims.

This application claims the benefit of priority to Japanese Patent Application No. 2024-048864 filed on March 26, 2024. The entire contents of this application are hereby incorporated herein by reference.

## Claims

1. A control voltage correction method of correcting a control voltage (Vcn) that causes a dielectrophoretic force to act on dielectric particles (P1) contained in a first fluid injected into a fluid chip (11), the method comprising:

   a step (S2, S22, S42) of measuring an impedance (IM1) between a pair of first electrodes (43a, 43b) in the fluid chip (11) through the first fluid or a second fluid;
   a step (S3, S23, S43) of calculating a correction coefficient (C) based on the measured impedance (IM1) between the pair of first electrodes (43a, 43b) and a fluid impedance (IM2) derived by a mathematical formula; and
   a step (S4, S24, S29, S44, S48) of correcting the control voltage (Vcn) based on the correction coefficient (C), wherein the fluid impedance (IM2) indicates an impedance of the first fluid or an impedance of the second fluid, the first fluid is a fluid containing the dielectric particles (P1) and other particles (P2), and
   the second fluid is a fluid of the same type as a fluid obtained by excluding the dielectric particles (P1) and the other particles (P2) from the first fluid.

2. The control voltage correction method according to claim 1, wherein the pair of first electrodes (43a, 43b) are disposed downstream of a flow of the first fluid or the second fluid with respect to a pair of second electrodes (33a, 33b) to which the control voltage (Vcn) is to be applied.

3. The control voltage correction method according to claim 2, further comprising:

    a step (S27, S46) of imaging the dielectric particles (P1) in a region downstream of the flow with respect to the pair of second electrodes (33a, 33b) and upstream of the flow with respect to the pair of first electrodes (43a, 43b); and
    a step (S28, S47) of changing the correction coefficient (C) based on the imaging result of the dielectric particles (P1),
    wherein in the step (S29, S48) of correcting the control voltage (Vcn), the control voltage (Vcn) is corrected based on the correction coefficient (C) after the change.

4. The control voltage correction method according to claim 3, wherein the step (S28, S47) of changing the correction coefficient (C) includes:

    a step (S281, S471) of obtaining frequency dependence of a separation rate of the dielectric particles (P1) based on the imaging result of the dielectric particles (P1) in a case where the dielectric particles (P1) are separated from the other particles (P2) by applying the control voltage (Vcn) to the pair of second electrodes (33a, 33b); and
    a step (S282, S472) of changing the correction coefficient (C) based on the frequency dependence of the separation rate of the dielectric particles (P1).

5. The control voltage correction method according to any one of claims 1 to 4, further comprising:

    a step (S1, S21) of injecting the second fluid into a channel (31) of the fluid chip (11); and
    a step (S5, S25) of injecting the first fluid into the channel (31) of the fluid chip (11) after injecting the second fluid into the channel (31) of the fluid chip (11),
    wherein in the step (S2, S22) of measuring the impedance (IM1) between the pair of first electrodes (43a, 43b), the impedance (IM1) between the pair of first electrodes (43a, 43b) is measured through the second fluid, and
    in the step (S3, S23) of calculating the correction coefficient (C), the correction coefficient (C) is calculated based on the impedance (IM1) between the pair of first electrodes (43a, 43b) measured through the second fluid and the fluid impedance (IM2) derived by the mathematical formula.

6. The control voltage correction method according to any one of claims 1 to 5, wherein the mathematical formula is a theoretical formula or an empirical formula,

    the theoretical formula includes an electrical resistivity or an electrical conductivity of the first fluid or an electrical resistivity or an electrical conductivity of the second fluid, and
    the empirical formula is a function determined by electrical characteristics of the fluid chip (11) and dielectrophoresis characteristics of the dielectric particles (P1).

7. The control voltage correction method according to any one of claims 1 to 6, wherein the correction coefficient (C) is calculated every time a frequency of the control voltage (Vcn) is changed, and
   the control voltage (Vcn) is corrected based on the correction coefficient (C) calculated according to a change in the frequency of the control voltage (Vcn).

8. A dielectrophoresis apparatus (1, 1A) comprising:

    a fluid chip (11) which includes a pair of first electrodes (43a, 43b) and to which a control voltage (Vcn) that causes a dielectrophoretic force to act on dielectric particles (P1) contained in a first fluid is to be applied;
    a measurement unit (203) to measure an impedance (IM1) between the pair of first electrodes (43a, 43b) through the first fluid or a second fluid; and
    a correction coefficient calculation unit (251) to calculate a correction coefficient (C) based on the measured impedance (IM1) between the pair of first electrodes (43a, 43b) and a fluid impedance (IM2) derived by a mathematical formula; and
    a voltage control unit (252) to correct the control voltage (Vcn) based on the correction coefficient (C),
    wherein the fluid impedance (IM2) indicates an impedance of the first fluid or an impedance of the second fluid,
    the first fluid is a fluid containing the dielectric particles (P1) and other particles (P2), and
    the second fluid is a fluid of the same type as a fluid obtained by removing the dielectric particles (P1) and the other particles (P2) from the first fluid.

9. The dielectrophoresis apparatus (1, 1A) according to claim 8, wherein the fluid chip (11) further includes a pair of second electrodes (33a, 33b) to which the control voltage (Vcn) is to be applied, and
the pair of first electrodes (43a, 43b) are disposed downstream of a flow of the first fluid or the second fluid with respect to the pair of second electrodes (33a, 33b).

10. The dielectrophoresis apparatus (1A) according to claim 9, further comprising an imaging unit (300) to image the dielectric particles (P1) in a region downstream of the flow with respect to the pair of second electrodes (33a, 33b) and upstream of the flow with respect to the pair of first electrodes (43a, 43b),

wherein the correction coefficient calculation unit (251) is configured to change the correction coefficient (C) based on the imaging result of the dielectric particles (P1), and
the voltage control unit (252) is configured to correct the control voltage (Vcn) based on the correction coefficient (C) after the change.

11. The dielectrophoresis apparatus (1A) according to claim 10, wherein in a case where the dielectric particles (P1) are separated from the other particles (P2) by applying the control voltage (Vcn) to the pair of second electrodes (33a, 33b), the correction coefficient calculation unit (251) is configured to obtain frequency dependence of a separation rate of the dielectric particles (P1) based on the imaging result of the dielectric particles (P1) and to change the correction coefficient (C) based on the frequency dependence.

12. The dielectrophoresis apparatus (1, 1A) according to any one of claims 8 to 11, further comprising a fluid injection unit (100) to inject the first fluid or the second fluid into a channel (31) of the fluid chip (11),

wherein the fluid injection unit (100) is configured to inject the second fluid into the channel (31) of the fluid chip (11) and then to inject the first fluid into the channel (31) of the fluid chip (11),
the measurement unit (203) is configured to measure the impedance (IM1) between the pair of first electrodes (43a, 43b) through the second fluid, and
the correction coefficient calculation unit (251) is configured to calculate the correction coefficient (C) based on the impedance (IM1) between the pair of first electrodes (43a, 43b) measured through the second fluid and the fluid impedance (IM2) derived by the mathematical formula.

13. The dielectrophoresis apparatus (1, 1A) according to any one of claims 8 to 12, wherein the mathematical formula is a theoretical formula or an empirical formula,

the theoretical formula includes an electrical resistivity or an electrical conductivity of the first fluid or an electrical resistivity or an electrical conductivity of the second fluid, and
the empirical formula is a function determined by electrical characteristics of the fluid chip (11) and dielectrophoresis characteristics of the dielectric particles (P1).

14. The dielectrophoresis apparatus (1, 1A) according to any one of claims 8 to 13, wherein the correction coefficient calculation unit (251) is configured to calculate the correction coefficient (C) every time a frequency of the control voltage (Vcn) is changed, and
the voltage control unit (252) is configured to correct the control voltage (Vcn) based on the correction coefficient (C) calculated according to a change in the frequency of the control voltage (Vcn).

FIG. 1

EP 4 631 623 A1

FIG. 2

FIG. 3

FIG. 4

FIG. 5

```
                    ┌──────────────┐
                    │    START     │
                    └──────┬───────┘
                           │
           ┌───────────────▼───────────────┐
           │      INJECT SECOND FLUID      │── S1
           └───────────────┬───────────────┘
                           │
           ┌───────────────▼───────────────┐
           │  MEASURE IMPEDANCE BETWEEN FIRST │── S2
           │  ELECTRODES THROUGH SECOND FLUID │
           └───────────────┬───────────────┘
                           │
           ┌───────────────▼───────────────┐
           │  CALCULATE CORRECTION COEFFICIENT │
           │    BASED ON MEASURED IMPEDANCE    │
           │ BETWEEN FIRST ELECTRODES AND FLUID│── S3
           │ IMPEDANCE DERIVED BY MATHEMATICAL │
           │             FORMULA               │
           └───────────────┬───────────────┘
                           │
           ┌───────────────▼───────────────┐
           │  CORRECT CONTROL VOLTAGE BASED │── S4
           │     ON CORRECTION COEFFICIENT  │
           └───────────────┬───────────────┘
                           │
           ┌───────────────▼───────────────┐
           │       INJECT FIRST FLUID      │── S5
           └───────────────┬───────────────┘
                           │
           ┌───────────────▼───────────────┐
           │  APPLY CORRECTED CONTROL VOLTAGE │── S6
           └───────────────┬───────────────┘
                           │
                    ┌──────▼───────┐
                    │     END      │
                    └──────────────┘
```

FIG. 6

FIG. 7

FIG. 8

```
                          ┌──────────────┐
                          │    START     │
                          └──────┬───────┘
                                 │
        ┌────────────────────────▼────────────────────────┐
        │            INJECT SECOND FLUID                    │──S21
        └────────────────────────┬────────────────────────┘
                                 │
        ┌────────────────────────▼────────────────────────┐
        │  MEASURE IMPEDANCE BETWEEN FIRST ELECTRODES       │──S22
        │            THROUGH SECOND FLUID                   │
        └────────────────────────┬────────────────────────┘
                                 │
        ┌────────────────────────▼────────────────────────┐
        │    CALCULATE CORRECTION COEFFICIENT BASED ON      │
        │  MEASURED IMPEDANCE BETWEEN FIRST ELECTRODES      │──S23
        │  AND FLUID IMPEDANCE DERIVED BY MATHEMATICAL      │
        │                  FORMULA                          │
        └────────────────────────┬────────────────────────┘
                                 │
        ┌────────────────────────▼────────────────────────┐
        │   CORRECT CONTROL VOLTAGE BASED ON CORRECTION     │──S24
        │                 COEFFICIENT                       │
        └────────────────────────┬────────────────────────┘
                                 │
        ┌────────────────────────▼────────────────────────┐
        │              INJECT FIRST FLUID                   │──S25
        └────────────────────────┬────────────────────────┘
                                 │
        ┌────────────────────────▼────────────────────────┐
        │        APPLY CORRECTED CONTROL VOLTAGE            │──S26
        └────────────────────────┬────────────────────────┘
                                 │
        ┌────────────────────────▼────────────────────────┐
        │             IMAGE REGION OF INTEREST              │──S27
        └────────────────────────┬────────────────────────┘
                                 │
        ┌────────────────────────▼────────────────────────┐
        │     CHANGE CORRECTION COEFFICIENT BASED ON        │──S28
        │               IMAGING RESULT                      │
        │  ┌────────────────────────────────────────────┐  │
        │  │ OBTAIN FREQUENCY DEPENDENCE OF SEPARATION   │  │──281
        │  │      RATE OF DIELECTRIC PARTICLES          │  │
        │  └────────────────────────────────────────────┘  │
        │  ┌────────────────────────────────────────────┐  │
        │  │  CHANGE CORRECTION COEFFICIENT BASED ON     │  │
        │  │ FREQUENCY DEPENDENCE OF SEPARATION RATE OF  │  │──282
        │  │        DIELECTRIC PARTICLES                │  │
        │  └────────────────────────────────────────────┘  │
        └────────────────────────┬────────────────────────┘
                                 │
        ┌────────────────────────▼────────────────────────┐
        │  CHANGE CONTROL VOLTAGE BASED ON CORRECTION       │──S29
        │           COEFFICIENT AFTER CHANGE                │
        └────────────────────────┬────────────────────────┘
                                 │
        ┌────────────────────────▼────────────────────────┐
        │       APPLY CONTROL VOLTAGE AFTER CHANGE          │──S30
        └────────────────────────┬────────────────────────┘
                                 │          S31
                     No      ◆───▼───────◆
        ┌────────────────────   IS CHANGE
        │               COMPLETION CONDITION
        │                  SATISFIED?
        │                    ◆───┬───◆
        │                        │ Yes
        │                 ┌──────▼───────┐
        │                 │     END      │
        │                 └──────────────┘
        └─────────────────────────────────┘
```

FIG. 9

FIG. 10

```
                    ( START )
                        |
                        v
        INJECT FIRST FLUID                              ~ S41
                        |
                        v
  MEASURE IMPEDANCE BETWEEN FIRST ELECTRODES           ~ S42
            THROUGH FIRST FLUID
                        |
                        v
     CALCULATE CORRECTION COEFFICIENT BASED ON
  MEASURED IMPEDANCE BETWEEN FIRST ELECTRODES          ~ S43
  AND FLUID IMPEDANCE DERIVED BY MATHEMATICAL
                  FORMULA
                        |
                        v
  CORRECT CONTROL VOLTAGE BASED ON CORRECTION          ~ S44
                COEFFICIENT
                        |
                        v
     APPLY CORRECTED CONTROL VOLTAGE                   ~ S45
                        |
                        v
        IMAGE REGION OF INTEREST                       ~ S46
                        |
                        v
  CHANGE CORRECTION COEFFICIENT BASED ON IMAGING       ~ S47
                  RESULT
  +-----------------------------------------------+
  | OBTAIN FREQUENCY DEPENDENCE OF SEPARATION      |    ~ 471
  |       RATE OF DIELECTRIC PARTICLES            |
  +-----------------------------------------------+
                        |
                        v
  +-----------------------------------------------+
  |   CHANGE CORRECTION COEFFICIENT BASED ON       |   ~ 472
  | FREQUENCY DEPENDENCE OF SEPARATION RATE OF     |
  |         DIELECTRIC PARTICLES                  |
  +-----------------------------------------------+
                        |
                        v
  CHANGE CONTROL VOLTAGE BASED ON CORRECTION          ~ S48
        COEFFICIENT AFTER CHANGE
                        |
                        v
     APPLY CONTROL VOLTAGE AFTER CHANGE               ~ S49
                        |
                        v
              IS CHANGE                          S50
   No      COMPLETION CONDITION
            SATISFIED?
                        |
                       Yes
                        v
                    ( END )
```

Europäisches
Patentamt

European
Patent Office

Office européen
des brevets

# EUROPEAN SEARCH REPORT

**Application Number**

EP 25 16 2231

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/276791 A1 (SCREEN HOLDINGS CO LTD [JP]) 5 January 2023 (2023-01-05) * abstract * * figure 1 * * paragraphs [0010] - [0096] * ----- | 1-14 | INV. B03C5/00 B03C5/02 |
| X | JP 2012 068192 A (SHARP KK) 5 April 2012 (2012-04-05) * figures 1,15 * * paragraphs [0003], [0039] - [0140] * ----- | 8-14 | |

| TECHNICAL FIELDS SEARCHED (IPC) |
|---|
| B03C G01N |

The present search report has been drawn up for all claims

| Place of search | Date of completion of the search | Examiner |
|---|---|---|
| The Hague | 19 August 2025 | Bielert, Erwin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 2231

This annex lists the patent family members relating to the patent documents cited in the above-mentioned European search report.
The members are as contained in the European Patent Office EDP file on
The European Patent Office is in no way liable for these particulars which are merely given for the purpose of information.

19-08-2025

| Patent document cited in search report | Publication date | Patent family member(s) | | Publication date |
|---|---|---|---|---|
| WO 2023276791 A1 | 05-01-2023 | CN | 117581095 A | 20-02-2024 |
| | | EP | 4365582 A1 | 08-05-2024 |
| | | JP | 2023006165 A | 18-01-2023 |
| | | JP | 2025120327 A | 15-08-2025 |
| | | US | 2024359189 A1 | 31-10-2024 |
| | | WO | 2023276791 A1 | 05-01-2023 |
| JP 2012068192 A | 05-04-2012 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023005958 A

- JP 2024048864 A